Europäisches Patentamt

(19) European Patent Office

Office européen des brevets

(11) Publication number: **0 170 466**
**B1**

(12) **EUROPEAN PATENT SPECIFICATION**

(45) Date of publication of patent specification: **21.12.88**

(21) Application number: **85305075.5**

(22) Date of filing: **17.07.85**

(51) Int. Cl.⁴: **G 01 N 31/22**

(54) **Method and test kit for determination of alkalinity in oils.**

(30) Priority: **20.07.84 US 632922**

(43) Date of publication of application:
**05.02.86 Bulletin 86/06**

(45) Publication of the grant of the patent:
**21.12.88 Bulletin 88/51**

(84) Designated Contracting States:
**BE DE FR GB IT NL SE**

(56) References cited:
**GB-A- 963 794**
**US-A-2 770 530**
**US-A-3 193 356**
**US-A-3 259 463**
**US-A-3 580 704**
**US-A-3 653 838**
**US-A-4 203 725**

(73) Proprietor: **MOBIL OIL CORPORATION**
**150 East 42nd Street**
**New York New York 10017 (US)**

(72) Inventor: **Houghton, George Lewis**
**R.R. 2, Box 404 Jefferson-Richwood Road**
**Mullica Hill New Jersey 08062 (US)**
Inventor: **Moore, Edward John**
**43 N. Childs Street**
**Woodbury New Jersey 08096 (US)**
Inventor: **Simpson, Charles Albert**
**114 Moser Road**
**Aston Pennsylvania 19014 (US)**

(74) Representative: **Cooper, John Anthony et al**
**Mobil Court 3 Clements Inn**
**London WC2A 2EB (GB)**

Courier Press, Leamington Spa, England.

## Description

The invention relates to a method and apparatus for determining the total base number (alkalinity) of oil. The apparatus is in the form of a kit containing vials of component liquids which can be admixed with an oil sample for alkalinity determinations.

Under conditions of actual use oil(s), such as those used for lubrication, no matter how well inhibited they may be, will tend to accumulate acid oxidation products over time. As long as bases from the additives in the oil are sufficient to neutralize these acids, such acids are not detrimental to the part or parts being protected. However, when the protective bases are used up by the acids, the oil must be removed or diluted with fresh oil or irreparable damage may occur to lubricated parts. One of the most vexing problems in this area, particularly for commercial operators, has been knowing when an oil has reached its limit of practical usefulness.

In the laboratory, a determination of the alkalinity condition of an oil sample is not especially difficult, because elaborate equipment can be used to carry out sophisticated analytical procedures. Obviously, however, such equipment and procedures are impractical in the field. In marine shipping, for example, the expense of placing the needed equipment and the personnel to operate it on ship is prohibitive.

Thus, a great deal of effort has been expended to discover a rapid and inexpensive method for estimating the amount of basicity present in an oil sample.

Methods and kits for the on-site determination of acidic and/or basic contaminants in oil samples are disclosed in US—A—4 203 725 and US—A—3 653 838. The kits comprise receptacles, reagents and means for adding a volume of oil. In the latter document a method for colorimetrically determining the Total Base Number of an engine oil is disclosed, which comprises titrating said oil with a strong acid in the presence of an indicator solution containing an organic acid, an indicator and a non-aromatic hydrocarbon containing no more than about 10 carbon atoms.

The present invention has been designed to miminize some of the practical problems associated with known oil alkalinity testing methods and apparatus. The invention provides an easy and safe method and test kit apparatus for determining alkalinity in terms of the total base number of the tested oil.

According to the present invention, a method is provided for colorimetrically determining the alkalinity, as total base number, of an oil comprising the steps of mixing an oil sample with an indicator solution to form an oil phase, titrating the oil phase with an aqueous mineral acid solution to form an aqueous phase above the oil phase and determining alkalinity in terms of total base number (TBN) by the number of units of mineral acid solution introduced into said oil phase, each of which corresponds to a predetermined base number, required to convert the aqueous layer from a color indicating a basic aqueous layer to a color indicating a neutral aqueous layer. The indicator solution is non-toxic, resistant to the effects of aromatics and water, and is soluble in oil. The oil and indicator solution are soluble in one another to form an oil phase. The combination of a monohydric aliphatic $C_1$—$C_6$ alcohol and at least one liquid halohydrocarbon that is heaver than water with the oil sample improves contact and ion exchange between the oil phase and the aqueous phase, while maintaining an oil phase density greater than that of the aqueous phase.

The apparatus of the invention employs a test kit for determining alkalinity in terms of total base number of an oil, comprising: a first receptacle adapted to admit a volume of oil and indicator solution thereto; a predetermined volume of indicator solution containing a colorimetric indicator, at least one liquid halohydrocarbon that is heavier than water, and an aliphatic monohydric $C_1$—$C_6$ alcohol; means for dispensing a volume of the oil into the first receptacle, for mixing therein with said predetermined volume of indicator solution; a second receptacle containing an aqueous mineral acid solution; and means for adding a portion of said aqueous mineral acid solution from said second receptacle to said first receptacle to form an aqueous phase above said oil phase.

In both the method and apparatus, the degree of oil alkalinity in terms of total base number is indicated by the volume of aqueous mineral acid solution which must be added to convert the color indicator from a basic indicating color to a neutral indicating color. Since each predetermined unit of aqueous mineral acid solution represents a predetermined base number, the total base number is indicated by multiplication of the number of volume units by the base number per unit volume.

Fig. 1 illustrates a syringe for dispensing a volume of sample oil which forms part of the test kit of the invention;

Fig. 2 illustrates a mixing receptacle which forms part of the test kit of the invention in an open-position;

Fig. 3 illustrates the first receptacle in a closed mixing position; and,

Fig. 4 illustrates preferred embodiments of a second receptacle which forms part of the test kit of the invention and which is used for dispensing a solution into the first receptacle.

As noted, the present invention provides a simple, easy to use method for testing for oil alkalinity as represented by a total base number (TBN). TBN is defined as mg KOH/g of an oil sample. The method is preferably implemented with a test kit which contains vials of indicator and mineral acid solutions which can be admixed with an oil sample to provide a colorimetric indication of oil alkalinity.

It is an essential feature of the invention that the indicator solution be soluble with an oil sample to form an oil phase. The indicator solution comprises an aliphatic monohydric alcohol, at least one liquid halohydrocarbon that is heavier than water and a colorimetric indicator. The halohydrocarbon produces an oil phase which is denser than water. The alcohol promotes mixing of halohydrocarbon, oil sample and aqueous mineral acid. Both the halohydrocarbon and alcohol are non-toxic. Any of the aliphatic monohydric alcohols from methanol through about $C_6$ alcohols would produce satisfactory solution forming results, however the preferred alcohol for the indicator solution is a butanol, with 1-butanol being particularly preferred. Methanol would be toxic and isopropyl alcohol does not work as well as 1-butanol. The preferred halohydrocarbon is 1,1,2-trichlorotrifluoroethane (freon).

A problem in the prior art is the adverse affect on previous alkalinity determining methods of water in the oils. The method of the present invention is applicable to oils containing water, because the oil phase is titrated with the aqueous mineral acid solution. In general aspects, the method and apparatus are applicable to any oil, whether it be of mineral or synthetic origin, or special purpose oils such as marine oil. The synthetic lubricating oil may be an ester oil, including one prepared from polyhydric alcohol and a monocarboxylic acid or a polycarboxylic acid and a monohydric alcohol. It may also be a synthetic hydrocarbon from olefin polymerization, or a polysiloxane or the like.

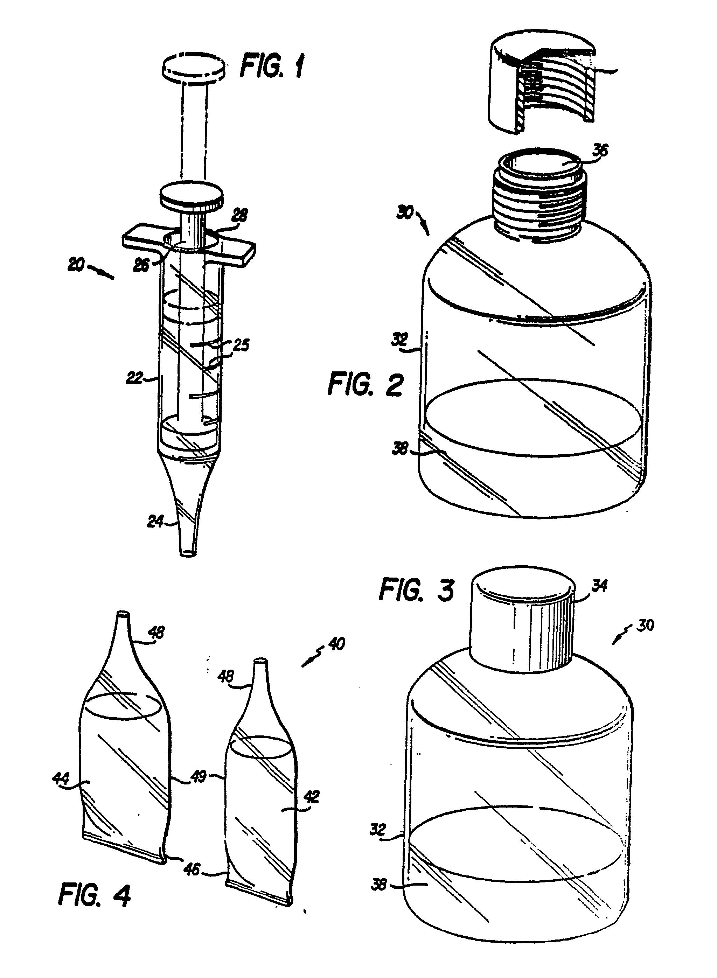

Before describing the method aspects of the present invention in detail, a preferred test kit which assists in implementing the method will be described with reference to Figs. 1—4. The test kit comprises a syringe 20 (Fig. 1) for dispensing a sample of oil. Syringe 20 has sidewalls 22 and a plunger 26 which passes through syringe top 28. Oil may be drawn into the syringe 20 through nozzle 24 and is dispensed therefrom. The sidewalls 22 may be provided with lines 25 to mark-off predetermined liquid volumes.

The test kit further comprises a 15 ml first mixing receptacle 30 (Fig. 2) adapted to be opened and closed on one end 36 thereof. The first receptacle 30 has sidewalls 32, screw lid 34, an opening 36 and may be precharged with a premeasured amount, e.g. 3.5 ml, of an indicator solution 38. Alternatively, the indicator solution may be provided in a separate container and placed in mixing receptacle 30 when an alkalinity test is to be performed. Fig. 3 shows the first receptacle 30 in a closed position.

The indicator solution 38 comprises a mixture of at least one halohydrocarbon, an aliphatic monohydric alcohol and a colorimetric indicator. The halohydrocarbon and alcohol are used because they are soluble in oil. The alcohol may be one of the aliphatic monohydric $C_1$—$C_6$ alcohols; however, a butanol and particularly 1-butanol is preferred because it has low toxicity, as noted, and, when combined with a halohydrocarbon, promotes the mixing of the halohydrocarbon, oil sample and aqueous mineral acid. The halohydrocarbon is preferably 1,1,2-trichlorotrifluoroethane (freon) because it is a dense liquid which, in combination with 1-butanol, is soluble with oil to form an oil phase while maintaining an oil phase density greater than that of water. The preferred range of compositions of indicator solution 38 in the oil phase is, for each part by volume of oil, from about 0.7 to about 4 parts by volume of halohydrocarbon and from about 0.2 to about 1.0 parts by volume of alcohol. The freon also thins out the oil to reduce viscosity, and improves contact and ion exchange between the oil phase and an aqueous phase (described below). The particularly preferred ratio by volume of butanol to freon in the indicator solution 38 is 6 parts freon to 1 part butanol, although other ratios can also be used.

The colorimetric indicator employed in solution 38 has a $pK_a$ in the range of about 3.4—6. Suitable colorimetric indicators include bromocresol green, methyl orange, methyl red or a combination of bromocresol green and methyl red. Bromocresol green is preferred because it has an unexpectedly strong color change, namely an intense blue color in basic solutions, and permits a determination of the total base number (TBN) within one TBN unit. The concentration of the colorimetric indicator resides in the range of 0.002—0.08 wt. % of the indicator solution. Bromocresol green is blue in basic solutions, green in neutral solutions and yellow in acidic solutions.

The test kit further comprises at least one second receptacle 40 containing a premeasured amount of aqueous mineral acid solution 49. Since it may be desirable to conduct tests with different volumes of aqueous mineral acid solution, more than one receptacle 40 may be provided with the test kit each containing a different liquid volume. Two such receptacles 42, 44 respectively precharged with 1 ml and 2 ml of aqueous mineral acid solution are shown in Fig. 4. Other sizes are also provided.

To protect a person using the kit from the aqueous mineral acid solution 49, each second receptacle 40 is preferably formed as a plastic enclosed pillow having a body portion 46 and a nipple portion 48. The second receptacle 40 is easily opened by cutting the end of nipple portion 48 thereby permitting the aqueous mineral acid solution 49 to be squeezed out of the receptacle 40. The aqueous mineral acid 49 could be any strong acid, such as HCl, $H_2SO_4$ or para-toluenesulfonic acid. The preferred acid is hydrochloric acid. To also protect a person using the kit, the acid concentration ranges from about 0.06 normal—0.3 normal which is only moderately toxic. Each second receptacle 40 contains an amount of aqueous mineral acid to equal one, or a multiple of one, total base number (TBN) unit relative to the oil.

Broadly, the method of invention is practiced in the following manner. A predetermined amount of indicator solution 38, e.g. 3.5 ml, is placed in a first receptacle 30. A sample of the oil to be tested, preferably at about 15°—50°C, is removed from a source (not shown) by syringe 20 through nozzle 24, and placed in first receptacle 30 where it contacts with indicator solution 38. The first receptacle 30 is then closed by screw lid 34 and is shaken to mix the oil and indicator solution 38 to form an oil phase. Then the first receptacle is opened and one unit volume of the aqueous mineral acid is introduced therein and the receptacle is shaken. However, the shaking is gentle to facilitate subsequent formation of an aqueous phase above the oil phase. Then the contents of the first receptacle 30 are allowed to settle and the aqueous phase is observed for color. If the aqueous phase is blue, the oil sample is basic, therefor it is necessary to determine the TBN of the oil sample, so the oil phase is titrated by adding an additional unit volume of aqueous mineral acid. This process of adding a unit of mineral acid solution and observing the resulting color of the aqueous phase is repeated until the aqueous phase turns green indicating the presence of a neutral aqeuous phase. The total base number of the oil is determined by multiplying the number of unit volumes of mineral acid solution required for the color change by the base number which each unit volume represents. For example, if a unit volume of mineral acid solution represents a base number of 1 relative to a given volume of an oil sample, and ten unit volumes are required for a color change to green, the total base number of the tested oil would be 10.

The acid strength of the aqueous mineral acid solution 49 ranges from 0.06—0.3 normal and the volume of aqueous mineral acid solution 49 in each second receptacle 40 is such that each second receptacle 40 contains enough aqueous mineral acid solution 49 to equal one unit of total base number (TBN) or a multiple of one unit of TBN relative to the oil sample. Each second receptacle 40 is preferably labeled with the number of units of TBN per its volume contents so the TBN of the oil sample, which is the sum of the units of TBN of the aqueous mineral acid solution added, can be easily determined. Typically fresh oil has a TBN ranging from 0—70 units. The useful TBN range for oil depends on the appliction in which the oil is used.

The following is an example of how the test kit can be used to implement the method of the invention:

(a) a 2 milliliter sample of oil at room temperature or slightly warmer (15°—50°C) is obtained with syringe 20;

(b) the oil is dispensed into the first receptacle 30 containing 3-1/2 ml of a 6:1 volume ratio, 1,1,2-trichlorotrifluoroethane, 1-butanol indicator solution 38 containing .02 wt. % bromocresol green;

(c) the screw lid 34 of the first receptacle 30 is closed and receptacle 30 is shaken to form an oil phase;

(d) the screw lid 34 is removed from the first receptacle 30, and the nipple 48 from the body portion 46 of a second receptacle 40 containing a volume of aqueous mineral acid solution 49 is clipped after which titration of the oil phase is started by adding one unit of aqueous mineral acid solution 49 from the second receptacle 40 to the first receptacle 30;

(e) the aqueous phase on top of the oil phase is gently rocked and an observation of the color of the aqueous phase is made; if the color is not easily discernible, the contents of receptacle 30 are allowed to settle for several minutes, e.g. 3, into more clearly distinct phases;

(f) If the color is green (indicating a neutral solution), the TBN is the units of TBN as labeled on the second receptacle 40 for the one unit of volume dispensed into receptacle 30;

(g) If the color is yellow (indicating an acidic solution), a new oil sample is tested and a second receptacle 40, containing an aqueous mineral acid solution having fewer TBN units per unit volume is used;

(h) If no separation occurs after a reasonable time (e.g. 60 minutes), a new oil sample is tested; or

(i) If the color is blue (indicating a basic solution), titration is continued, by adding the aqueous mineral acid solution from one or more second receptacles 40 one unit at a time until a green color is observed.

(j) The TBN of the oil sample is the sum of the base number units labeled on each second receptacle 40 for the number of volume units which were used for the titration. That is, the base number per unit volume multiplied by the number of volume units used yields the total base number.

If a test kit containing an aqueous mineral acid calculated by base number per unit volume is not employed in the method of the invention, then total base number, when using an aqueous mineral acid solution of known normality, may be calculated as follows.

$$TBN = \frac{N \times 56.1 \times V}{S}$$

TBN=mg KOH/g—sample
N=Normality g-equivalent/liter
56.1=Equivalent Weight of KOH, g/g-equivalent
V=Volume of titrant, ml
S=weight of oil sample, g.

The following is an example of the calculation of TBN in a case where a 2.0 ml oil sample, having a specific gravity of 0.90, is mixed with 2.5 ml of colorimetric indicator solution and titrated with 10 ml. of a 0.10 N aqueous HCl solution to achieve a neutral aqueous phase.

$$TBN = \frac{0.10 \times 56.1 \times 10}{2.0 \times 0.9} = 31$$

As is evident from the foregoing, the present invention provides a simple, safe and easy to use method and apparatus for testing the alkalinity of oil.

## Claims

1. A test kit for colorimetrically determining the total base number of oil, comprising:

(a) a first receptacle adapted to admit a volume of oil therein;

(b) a predetermined volume of indicator solution containing a colorimetric indicator, at least one halohydrocarbon, and an aliphatic monohydric alcohol;

(c) means for dispensing a sample of oil to be tested into said first receptacle where it is mixed with said indicator solution to form an oil phase;

(d) a second receptacle containing an aqueous mineral acid solution; and

(e) means for introducing a portion of said aqueous mineral acid solution from said second receptacle into said first receptacle to form an aqueous phase above said oil phase.

2. The test kit of Claim 1, wherein said first receptacle is precharged with said predetermined volume of indicator solution prior to the dispensing therein of said oil.

3. The test kit of Claim 1, wherein said at least one halohydrocarbon is 1,1,2-trichlorotrifluoroethane.

4. The test kit of Claim 1, wherein said alcohol is butanol.

5. The test kit of Claim 4, wherein said butanol is 1-butanol.

6. The test kit of Claim 1, wherein colorimetric indicator has a $pK_a$ in the range of about 3.5—6.

7. The test kit of Claim 6, wherein said colorimetric indicator comprises bromocresol green.

8. The test kit of Claim 1, wherein said aqueous mineral acid comprises HCl.

9. The test kit of Claim 1, wherein said oil is a marine oil.

10. The test kit of Claim 1, wherein the indicator solution comprises per part by volume of oil;

(a) from about 0.7 to about 4.0 parts by volume of halohydrocarbon;

(b) from about 0.2 to about 1.0 parts by volume of alcohol, and wherein said indicator solution contains from 0.002—0.08 wt. % of colorimetric indicator.

11. The kit of Claim 1, wherein said indicator solution comprises 1 part 1-butanol, 6 parts 1,1,2-trichlorotrifluoroethane and 0.02 wt. % of a colorimetric indicator.

12. The test kit of Claim 1, wherein said second receptacle is labeled with a number of base units per given volume of aqueous mineral acid solution therein.

13. A method for colorimetrically determining the alkalinity of oil, comprising the steps of:

(a) contacting a sample of oil with an indicator solution comprising a colorimetric indicator, at least one halohydrocarbon, and a monohydric aliphatic alcohol;

(b) allowing said oil sample and indicator solution to form an oil phase;

(c) introducing a portion of an aqueous mineral acid solution into said oil phase;

(d) allowing said aqueous mineral acid solution to form an aqueous phase above said oil phase to absorb a portion of said colorimetric indicator into said aqueous phase; and

(e) determining alkalinity in terms of total base number by a number of units of base number which corresponds to the amount of aqueous mineral acid solution required to be introduced into said oil phase to convert the aqueous layer from a color indicating a basic aqueous layer to a color indicating a neutral aqueous layer.

14. The method of Claim 13, wherein said halohydrocarbon is 1,1,2-trichlorotrifluoroethane.

15. The method of Claim 13, wherein said alcohol is butanol.

16. The method of Claim 15, wherein said butanol is 1-butanol.

17. The method of Claim 13, wherein said colorimetric indicator has a $pK_a$ from about 3.4—6.

18. The method of Claim 17, wherein said colorimetric indicator comprises bromocresol green.

19. The method of Claim 13, wherein said aqueous mineral acid solution comprises HCl.

20. The method of Claim 13, wherein said oil is a marine oil.

21. The method of Claim 13, wherein the indicator solution comprises, for each one part by volume of oil, (1) from about 0.7 to about 4.0 parts by volume of halohydrocarbon, and (2) from about 0.2 to about 1.0 parts by volume of alcohol, and wherein said colorimetric indicator comprises from .002—.08 wt. % of indicator solution.

22. The method of Claim 13, wherein said indicator solution comprises 1 part 1-butanol, 6 parts 1,1,2-trichlorotrifluoroethane and 0.02 wt. % of a colorimetric indicator.

23. The kit of Claim 1, wherein said indicator solution comprises 1 part 1-butanol, 6 parts 1,1,2-trichlorotrifluoroethane and 0.002—0.08 wt. % of a colorimetric indicator.

24. The method of 13, wherein said indicator solution comprises 1 part 1-butanol, 6 parts 1,1,2-trichlorotrifluoroethane and 0.002—0.08 wt. % of a colorimetric indicator.

## Patentansprüche

1. Testanordnung zur kolorimetrischen Bestimmung der Gesamtbasenzahl eines Öls, mit

a) einem zur Aufnahme eines Ölvolumens geeigneten ersten Behälter,

b) einem festgelegten Volumen einer Indikatorlösung, welche einen kolorimetrischen Indikator, mindestens einen Halogenkohlenwasserstoff und einen einwertigen aliphatischen Alkohol enthält,

c) einer Vorrichtung zum Abgeben einer zu prüfenden Ölprobe in den ersten Behälter, in dem die Ölprobe mit der Indikatorlösung unter Bildung einer Ölphase gemischt wird,

d) einem zweiten Behälter, welcher eine Wäßrige Lösung einer Mineralsäure enthält, und

e) einer Vorrichtung zur Zuführung eines Anteils der wäßrigen Mineralsäurelösung aus dem zweiten Behälter in den ersten Behälter, wobei eine wäßrige Phase über der Ölphase gebildet wird.

2. Testanordnung nach Anspruch 1, worin in dem ersten Behälter vor seiner Beschickung mit Öl das festgelegte Volumen der Indikatorlösung vorgelegt wird.

3. Testanordnung nach Anspruch 1, worin wenigstens ein Halogenkohlenwasserstoff 1,1,2-Trichlortrifluorethan ist.

4. Testanordnung nach Anspruch 1, worin der Alkohol Butanol ist.

5. Testanordnung nach Anspruch 4, worin das Butanol 1-Butanol ist.

6. Testanordnung nach Anspruch 1, worin der kolorimetrische Indikator einen $pK_a$-Wert im Bereich von etwa 3, 4 bis 6 aufweist.

7. Testanordnung nach Anspruch 6, worin der kolorimetrische Indikator Bromkreisolgrün enthält.

8. Testanordnung nach Anspruch 1, worin die wäßrige Mineralsäure HCl enthält.

9. Testanordnung nach Anspruch 1, worin das Öl ein Marineöl ist.

10. Testanordnung nach Anspruch 1, worin die Indikatorlösung pro Vol.-Teil Öl

a) etwa 0,7 bis etwa 4,0 Vol.-Teile eines Halogenkohlenwasserstoffs,

b) etwa 0,2 bis etwa 1,0 Vol.-Teile Alkohols enthält, und worin die Indikatorlösung 0,002 bis 0,08 Gew.-% eines kolorimetrischen Indikators beeinhaltet.

11. Testanordnung nach Anspruch 1, worin die Indikatorlösung 1 Teil 1-Butanol, 6 Teile 1,1,2-Trichlortrifluorethan und 0,02 Gew.-% eines kolorimetrischen Indikators enthält.

12. Testanordnung nach Anspruch 1, worin der zweite Behälter mit einer Anzahl von Baseneinheiten pro vorgegebenem Volumen einer darin enthaltenen wäßrigen Mineralsäurelösung beschriftet ist.

13. Verfahren zum kolorimetrischen Bestimmen der Basizität eines Öls, gekennzeichnet durch die Verfahrensschritte:

a) Inberührungsbringen einer Ölprobe mit einer Indikatorlösung, welche einen kolorimetrischen Indikator, mindestens einen Halogenkohlenwasserstoff und einen einwertigen aliphatischen Alkohol enthält,

b) Ausbilden einer Ölphase aus der Ölprobe und der Indikatorlösung,

c) Einführen eines Anteils einer wäßrigen Mineralsäurelösung in die Ölphase,

d) Ausbilden einer wäßrigen Phase aus der wäßrigen Mineralsäurelösung über der Ölphase, um einen Teil des kolorimetrischen Indikators in der wäßrigen Phase zu absorbieren, und

e) Bestimmen der Basizität in Form der Gesamtbazenzahl durch eine Anzahl von Einheiten der Basenzahl, welcher der Menge der wäßrigen Mineralsäurelösung entspricht, die zum Einführen in die Ölphase erforderlich ist, um in der wäßrigen Schicht eine Farbe, welche auf eine basische Wäßrige Schicht hinweist, in eine Farbe, welche auf eine neutrale wäßrige Schicht hinweist, umzuwandeln.

14. Verfahren nach Anspruch 13, worin der Halogenkohlenwasserstoff 1,1,2-Trichlortrifluorethan ist.

15. Verfahren nach Anspruch 13, worin der Alkohol Butanol ist.

16. Verfahren nach Anspruch 15, worin das Butanol 1-Butanol ist.

17. Verfahren nach Anspruch 13, worin der kolorimetrische Indikator einen $pK_a$-Wert von etwa 3, 4 bis 6 aufweist.

18. Verfahren nach Anspruch 17, worin der kolorimetrische Indikator Bromkresolgrün enthält.

19. Verfahren nach Anspruch 13, worin die wäßrige Mineralsäurelösung HCl enthält.

20. Verfahren nach Anspruch 13, worin das Öl ein Marineöl ist.

21. Verfahren nach Anspruch 13, worin die Indikatorlösung für jeden Vol.-Teil eines Öls (1) etwa 0,7 bis etwa 4,0 Vol.-Teile eines Halogenkohlenwasserstoffs, und (2) etwa 0,2 bis etwa 1,0 Vol.-Teile eines Alkohols enthält, und worin der kolorimetrische Indikator 0,002 bis 0,08 Gew.-% einer Indikatorlösung enthält.

22. Verfahren nach Anspruch 13, worin die Indikatorlösung 1 Teil 1-Butanol, 6 Teile 1,1,2-Trichlortrifluorethan und 0,02 Gew.-% eines kolorimetrischen Indikators enthält.

23. Testanordnung nach Anspruch 1, worin die Indikatorlösung 1 Teil 1-Butanol, 6 Teile 1,1,2-Trichlortrifluorethan und von 0,002 bis 0,08 Gew.-% eines kolorimetrischen Indikators enthält.

24. Verfahren nach Anspruch 13, worin die Indikatorlösung 1 Teil 1-Butanol, 6 Teile 1,1,2-Trichlortrifluorethan und von 0,002 bis 0,08 Gew.-% eines kolorimetrischen Indikators enthält.

**Revendications**

1. Un kit de test pour déterminer colorimétriquement l'indice de base total d'une huile, comprenant:

(a) un premier réceptable susceptible d'y admettre un volume d'huile;

(b) un volume prédéterminé d'une solution d'indicateur contenant un indicateur colorimétrique, au moins un hydrocarbure halogéné, et un alcool aliphatique monohydrique;

(c) un moyen pour distribuer un échantillon d'huile à tester dans ledit premier réceptacle où il est mélangé avec ladite solution d'indicateur pour former une phase huileuse;

(d) un second réceptacle contenant une solution aqueuse d'acide minéral; et

(e) un moyen pour introduire une portion de ladite solution aqueuse d'acide minéral dudit second réceptacle dans ledit premier réceptacle pour former une phase aqueuse au-dessus de cette phase huileuse.

2. Le kit de test selon la revendication 1, selon lequel ledit premier réceptacle est préalablement chargé dudit volume prédéterminé de solution d'indicateur avant la distribution de ladite huile.

3. Le kit de test selon la revendication 1, selon lequel ledit hydrocarbure halogéné est le 1,1,2-trichlorotrifluoroéthane.

4. Le kit de test selon la revendication 1, selon lequel ledit alcool est le butanol.

5. Le kit de test selon la revendication 4, selon lequel ledit butanol est le 1-butanol.

6. Le kit de test selon la revendication 1, selon lequel ledit indicateur colorimétrique a un $pK_a$ dans l'intervalle d'environ 3,4—6.

7. Le kit de test selon la revendication 6, selon lequel ledit indicateur colorimétrique comprend du vert de bromocrésol.

8. Le kit de test selon la revendication 1, selon lequel ledit acide minéral aqueux comprend du HCl.

9. Le kit de test selon la revendication 1, selon lequel ladite huile est une huile marine.

10. Le kit de test selon la revendication 1, selon lequel la solution d'indicateur comprend par partie en volume d'huile:

(a) d'environ 0,7 à environ 4,0 parties en volume d'hydrocarbure halogéné;

(b) d'environ 2,0 à environ 1,0 partie en volume d'alcool, et selon lequel ladite solution d'indicateur contient de 0,002—0,08% en poids d'indicateur colorimétrique.

11. Le kit selon la revendication 1, selon lequel ladite solution d'indicateur comprend 1 partie de 1-butanol, 6 parties de 1,1,2-trichlorotrifluoroéthane et 0,02% en poids d'un indicateur colorimétrique.

12. Le kit de test selon la revendication 1, selon lequel ledit second réceptacle est étiqueté avec un nombre d'unités de base par volume donné de solution aqueuse d'acide minéral y contenu.

13. Un procédé pour déterminer colorimétriquement l'alcalinité d'une huile, comprenant les étapes suivantes:

(a) mise en contact d'un échantillon d'huile avec une solution d'indicateur comprenant un indicateur colorimétrique, au moins un hydrocarbure halogéné, et un alcool aliphatique monohydrique;

(b) permission audit échantillon d'huile et à la solution d'indicateur de former une phase huileuse;

(c) introduction d'une portion d'une solution aqueuse d'acide minéral dans ladite phase huileuse;

(d) permission à ladite solution aqueuse d'acide minéral de former une phase aqueuse au-dessus de ladite phase huileuse pour absorber une portion dudit indicateur colorimétrique dans ladite phase aqueuse; et

(e) détermination de l'alcalinité en termes d'indice de base total par un nombre d'unités d'indice de base qui correspond à la quantité de solution aqueuse d'acide minéral requise pour être introduite dans ladite phase huileuse pour convertir la couche aqueuse d'une couleur indiquant une couche aqueuse basique à une coloration indiquant une couche aqueuse neutre.

14. Le procédé selon la revendication 13, selon lequel ledit hydrocarbure halogéné est le 1,1,2-trichlorotrifluoroéthane.

15. Le procédé selon la revendication 13, selon lequel ledit alcool est le butanol.

16. Le procédé selon la revendication 15, selon lequel ledit butanol est le 1-butanol.

17. Le procédé selon la revendication 13, selon lequel ledit indicateur colorimétrique a un $pK_a$ d'environ 3,4—6.

18. Le procédé selon la revendication 17, selon lequel ledit indicateur colorimétrique comprend du vert de bromocrésol.

19. Le procédé selon la revendication 13, selon lequel ladite solution aqueuse d'acide minéral comprend du HCl.

20. Le procédé selon la revendication 13, selon lequel ladite huile est une huile marine.

21. Le procédé selon la revendication 13, selon lequel la solution d'indicateur comprend, pour chaque partie en volume d'huile, (1) d'environ 0,7 à environ 4,0 parties en volume d'hydrocarbure halogéné, et (2) d'environ 0,2 à environ 1,0 partie en volume d'alcool, et selon lequel ledit indicateur colorimétrique comprend de 0,002—0,08% en poids de solution d'indicateur.

22. Le procédé selon la revendication 13, selon lequel ladite solution d'indicateur comprend 1 partie de 1-butanol, 6 parties de 1,1,2-trichlorotrifluoroéthane et 0,002% en poids d'un indicateur colorimétrique.

23. Le kit selon la revendication 1, selon lequel ladite solution d'indicateur comprend 1 partie de 1-butaol, 6 parties de 1,1,2-trichlorotrifluoroéthane et 0,002—0,08% en poids d'un indicateur colorimétrique.

24. Le procédé selon la revendication 13, selon lequel ladite solution d'indicateur comprend 1 partie de 1-butanol, 6 parties de 1,1,2-trichlorotrifluoroéthane et 0,002—0,08% en poids d'un indicateur colorimétrique.

FIG. 1

FIG. 2

FIG. 3

FIG. 4

1